# EUROPEAN PATENT SPECIFICATION

(11) **EP 2 824 897 B1**
(45) Date of publication and mention of the grant of the patent: **29.03.2017**
(21) Application number: 12874595.7
(22) Date of filing: 25.06.2012
(51) Int. Cl.: H04M 1/725

(54) **MOBILE TERMINAL AND ABNORMAL CALL PROCESSING METHOD THEREFOR**
MOBILES ENDGERÄT UND VERFAHREN ZUR VERARBEITUNG ABNORMALER ANRUFE DAFÜR
TERMINAL MOBILE ET PROCÉDÉ DE TRAITEMENT D'APPELS ANORMAUX ASSOCIÉ

(30) Priority: 16.04.2012 CN 201210111242
(43) Date of publication of application: 14.01.2015
(73) Proprietor: ZTE Corporation, Shenzhen, Guangdong 518057 (CN)
(72) Inventor: FANG, Wen, Shenzhen, Guangdong 518057 (CN); HUANG, Lianfang, Shenzhen, Guangdong 518057 (CN)
(74) Representative: Modiano, Micaela Nadia
(86) International application number: PCT/CN2012/077450
(87) International publication number: WO 2013/155788

(56) References cited:
- CN-A- 101 094 267
- CN-A- 102 340 599
- CN-A- 102 413 214
- US-A- 4 922 529
- US-A1- 2003 143 986
- US-A1- 2011 150 202
- US-B1- 6 662 026

## Description

### Technical Field

The present invention relates to the field of communications, and in particular, to a mobile terminal and an abnormal call processing method thereof.

### Background of the Related Art

With the continuous development of terminal technology and the popularity of mobile phones, users increasingly depend on mobile phones, of which one of the most commonly used functions is a voice call function.

However, in the process of a call, the following condition often occurs. After a call has ended, both sides forget to hang up the call due to various reasons, or do not hang up successfully, which results in the mobile phone being idle for a long time and the call being in progress. Especially in the process of a call between a mobile phone and a telephone, sometimes the mobile phone is in an idle call state for a long time since the telephone has not been put in a right place. This wastes the user's expenses, and more importantly, the user of the mobile phone can not find that there is another incoming call in this period of time.

US6662026 discloses a method for detecting and handling accidental dialing on a mobile communications device.

US4992529 discloses an automatic hangup apparatus for restoring service to off-hook telephones.

### Summary of the Invention

The technical problem to be solved by the present invention is to provide a mobile terminal and an abnormal call processing method thereof, so as to solve the problem that a normal voice call is influenced since a mobile phone is in an idle call state for a long time.

In order to solve the above technical problem, the present invention discloses an abnormal call processing method of a mobile terminal, comprising:
in the process of a voice call, a mobile terminal detecting whether the mobile terminal is in an idle call state in real time, and when it is detected that the mobile terminal is in the idle call state, prompting in accordance with a preset mode a user that the mobile terminal is in the idle call state, or automatically hanging up the voice call, or hanging up the voice call after prompting the user that the mobile terminal is in the idle call state.

Preferably, in the method, the process of the mobile terminal hanging up the voice call after prompting in accordance with a preset mode the user that the mobile terminal is in the idle call state comprises:
the mobile terminal prompting the user that the mobile terminal is in the idle call state in accordance with a preset mode, and if an operation instruction of ending the voice call initiated by the user has not been received within set duration or when a number of prompts has achieved a set value, automatically hanging up the voice call.

Preferably, in the method, the process of detecting whether the mobile terminal is in an idle call state comprises:
in the process of a voice call, the mobile terminal detecting input and output audio signals in real time, and if the input and output audio signals have not been detected within set duration, determining that the mobile terminal is in the idle call state.

Preferably, in the method, if the input or output audio signal is detected, judging whether a frequency and/or intensity of the detected audio signal is within a human voice range, and if the frequencies or intensities of all the detected audio signals exceed the human voice range within set duration, determining that the mobile terminal is in the idle call state.

The present invention further discloses a mobile terminal, comprising:
a detection unit, configured to in the process of a voice call, detect whether the mobile terminal is in an idle call state, and when it is detected that the mobile terminal is in the idle call state, notify a voice call module that the mobile terminal is in the idle call state;
the voice call module, configured to: upon receiving the notification that the mobile terminal is in the idle call state, prompt in accordance with a preset mode a user that the mobile terminal is in the idle call state, or automatically hang up the voice call, or hang up the voice call after prompting the user that the mobile terminal is in the idle call state.

Preferably, in the mobile terminal, the voice call module is configured to: when hanging up the voice call after prompting the user that the mobile terminal is in the idle call state, firstly prompt the user that the mobile terminal is in the idle call state in accordance with a preset mode, and if an operation instruction of ending the voice call initiated by the user has not been received within set duration or when a number of prompts has achieved a set value, automatically hang up the voice call.

Preferably, in the mobile terminal, the detection unit comprises:
a voice recognition module, configured to detect input and output audio signals in real time in the process of a voice call,
a judgment module, configured to determine that the mobile terminal is in the idle call state when the input and output audio signals have not been detected by the voice recognition module within set duration.

Preferably, in the mobile terminal, the voice recognition module is further configured to detect a frequency and/or intensity of an input or output audio signal when the audio signal is detected;
the judgment module is configured to determine that the mobile terminal is in the idle call state when the voice recognition module detects that the frequency and/or intensity of the audio signal exceeds the human voice range within set duration.

The technical solution of the present application solves the problem of wasting the telephone expenses of a user caused by an ultra-long call because both sides on a call do not hang up the call in time, thereby improving the user experience.

### Brief Description of Drawings

The accompanying drawings described herein are used to provide a better understanding of the present invention and constitute a part of this application, and the schematic embodiments of the present invention and the descriptions thereof are used to explain the present invention and do not constitute an improper definition of the present invention. In the accompanying drawings:
Fig. 1 is a flowchart of prompting an abnormal call through a motion state according to an embodiment;
Fig. 2 is a flowchart of prompting an abnormal call through an audio input according to an embodiment; and
Fig. 3 is a flowchart of prompting an abnormal call by combining the two methods according to an embodiment.

### Preferred Embodiments of the Present Invention

The technical schemes of the present invention will be described in detail below in conjunction with accompanying drawings. It should be illustrated that, in the case of no conflict, the embodiments of this application and the features in the embodiments could be combined randomly with each other.

### Example one

The applicant of the present application finds that when an existing mobile terminal is in an idle call state for a long time (i.e., a voice call end operation is not performed after a user ends a voice call), it will results in the mobile terminal not continuing to perform a normal voice call. Therefore, the applicant proposes that a voice state of both sides on a call and/or a motion state of a mobile phone is detected to judge whether the mobile phone is in an idle call state (also referred to as an abnormal call state) and prompt the user in time.

For example, the applicant proposes that:

A first time threshold is set, and if the mobile phone is still in the idle call state for a long time after the time is larger than the threshold, the sides on a call (i.e., users) are prompted in a form of text, picture, voice or video. Wherein, the first time threshold and the prompting mode may be preset by a user.

On basis of the above idea, the present example provides an abnormal call processing method of a mobile terminal, comprising:
in the process of a voice call, a mobile terminal detecting whether the mobile terminal is in an idle call state in real time, and when it is detected that the mobile terminal is in the idle call state, in accordance with a preset mode, prompting a user that the voice call has ended, or automatically hanging up the voice call, or hanging up the voice call after prompting the user that the voice call has ended.

The specific process of hanging up the voice call after prompting the user that the voice call has ended comprises: after the mobile terminal prompts the user that the voice call has ended in accordance with a preset mode, the mobile terminal further monitoring whether an operation instruction of ending the voice call initiated by the user has been received within set duration or when a number of prompts has achieved a set value, and if the operation instruction has not been received, automatically hanging up the voice call.

Wherein, the mode of detecting whether the mobile terminal is in the idle call state may comprise in the process of a voice call, detecting an input audio signal (i.e., voice input through the local phone) and an output audio signal (i.e., a voice input through the counterpart phone) in real time, and if the input and output audio signals have not been detected within set duration (i.e., said first time threshold), determining that the mobile terminal is in the idle call state.
if the input or output audio signal is detected, it is continually judged whether a frequency and/or intensity of the detected input or output audio signal is within a human voice range, and if the frequencies or intensities of all the detected audio signals exceed the human voice range within set duration, determining that the mobile terminal is in the idle call state.

For said mode of detecting whether the mobile phone is in the idle call state, it needs to be further described below:

At present, ordinary people can hear the sound wave in the frequency range of 20HZ--20KHZ. The sound wave is an infrasound when its frequency is less than 20HZ and is an ultrasound when its frequency is more than 20KZ. The human voice range only occupies a narrow part of the voice range which can be heard by the people, and is generally within 100HZ-----8KHZ. 200-4000HZ is referred to as a voice fundamental frequency, and frequencies at which most people speak are all in this range. There is an overlap between the frequency range of many instruments and the voice range. However, most of environmental noises in life, such as cooking, collision, etc., can be separated from human voice through frequency analysis. The human ear is most keen for audio near 3 KHZ. Therefore, it can be determined whether the current voice call is a voice call between normal users by judging whether the frequency of the detected input or output audio signal belongs to the human voice range. That is, when both frequencies of the input and output audio signals are not in the human voice range, it is considered that it is an abnormal call state, i.e., the mobile terminal is in the idle call state.

On the other hand, the human voice can also be separated from the environmental noise through the intensity of voice. In general, when people talk towards a phone, the intensity of the human voice experienced by a microphone is much larger than the intensity of the environmental noise. The intensity of voice of an ordinary person on a call is approximately in a range of 30∼100dB, and the intensity of voice in an ordinary conversation is approximately in 60∼70dB. If the mobile phone detects that the intensity of voice received by both sides for a long time is smaller than the intensity of voice during a conversation of normal persons, it may be considered that the mobile phone is possibly in an idle call state, and thus the user is prompted or even the phone is hung up.

It is an existing technology in the voice processing field to simply detect from the environment whether a human voice is input, but there is no precedent to apply the technology in the mobile phone voice call processing at present.

On basis of the above principle of judging whether a human voice is input based on frequency and intensity, the frequency detection of the audio signal may preferably be used as a primary judgment basis, and the intensity detection of the audio signal is used as an auxiliary judgment basis. That is, the state of the mobile terminal is judged primarily by detecting whether the frequency of the audio signal belongs to the human voice range, and whether the mobile terminal is in an idle call state is secondary judged by detecting the intensity of the audio signal. That is, once it is detected that the frequency of the audio signal exceeds the human voice range, it can be judged that the mobile terminal is in the idle call state. When it is detected that the frequency of the audio signal does not exceed the human voice range, it can further be judged through the intensity of the audio signal whether the terminal is in the idle call state.

In addition, the mode of detecting whether the mobile phone is in the idle call state may further comprise: in the process of a voice call, a gravity sensor in the mobile terminal detecting X, Y and Z values of the mobile terminal in real time, and only if the detected X, Y and Z values are not changed within set duration, detecting whether the mobile terminal is in the idle call state.

Said principle of detecting whether the mobile terminal is in the idle call state through a gravity sensor is that after the call is started, the mobile phone compares the X, Y and Z values detected by the gravity sensor once every predetermined time. If the X, Y and Z values of the gravity sensor do not change within set duration (for example, said first time threshold), it is considered that the user has put down the mobile phone and the mobile phone is not in a phone-hold call state, i.e., the mobile terminal is in an idle call state. It should be illustrated that the X, Y and Z values of the gravity sensor not changing in the present embodiment means that the change of the X, Y and Z values within set duration is in an allowable change range, i.e., there is a small change. For example, the allowable change range of xyz of the existing sensor is (0.114, -0.191,9.845), which is a change in the second and third decimal places of that number (which may due to a vibration in the environment). Specifically, the operating principle of the gravity sensor is generally that due to the deformation of an internal crystal, a voltage signal is generated and a voltage output is formed to be transferred to a signal processing module of a mobile terminal.

It should be further illustrated that in order to reduce misjudgment conditions, said modes of determining whether the mobile terminal is in an idle call state through frequency and/or intensity of the input voice and the gravity sensor can be combined, i.e., whether the user is on a call with a phone in hand or has put down the mobile phone is firstly judged through a gravity sensor, and when it is determined that the user has put down the mobile terminal, whether the mobile terminal is really in an idle call state is then further judged through frequency and/or intensity judgment on the input voice.

Said process of the abnormal call of the mobile terminal will be described in detail below in conjunction with specific applications.

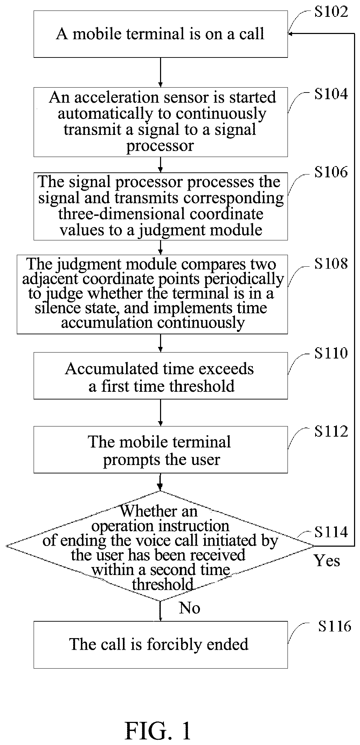

In a case that the mobile terminal has a gravity sensor, the process of an abnormal call may be performed on the abnormal call through a motion state. As shown in Fig. 1, the process includes the following steps.

In step S102, a mobile terminal is on a call, and a user (or terminal by default) starts an abnormal call prompt function.

In step S104, after the voice call is started, an acceleration sensor is started synchronously to transmit a piezoelectric signal to a signal processor for process.

In step S106, the signal processor transforms the signal value into three-dimensional coordinate values XYZ of the mobile terminal.

In step S108, a distance between (or sizes of) first two coordinate points is calculated periodically, and if the distance is 0 or a difference between the sizes is very small, it is judged that the mobile terminal is in a silence state, and a timer T1 is started.

In step S110, accumulated time exceeds a first time threshold.

Wherein, when differences between several continuous coordinate points and a previous coordinate point are suddenly very large in a time period when the value of T1 has not exceeded the first time threshold, the value of T1 is reset.

In step S 112, the mobile terminal prompts the user in accordance with a preset prompt mode (such as in a form of combination of voice, vibration, picture, video etc.).

In step S 114, the mobile terminal detects whether an operation instruction of ending the voice call initiated by the user (including an operation on the touch screen or keyboard of the mobile phone) has been received within a second time threshold, and if yes, the process returns to step S102; otherwise, the process proceeds to step S 116.

In step S 116, the mobile phone forcibly ends the call.

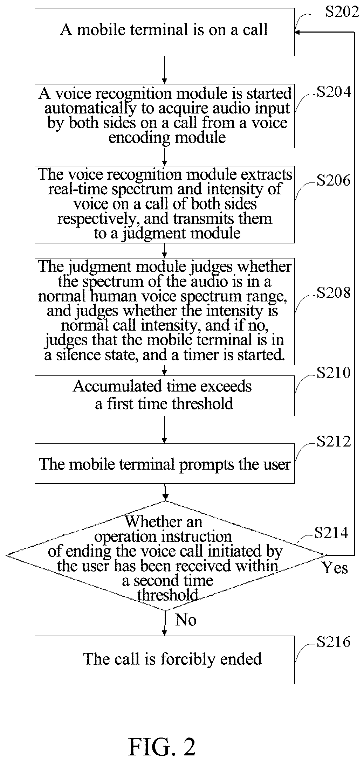

Fig. 2 illustrates a specific process of processing an abnormal call through an audio input, which comprises the following steps.

In step S202, a mobile terminal is on a call, and a user (or terminal by default) starts an abnormal call prompt function.

In step S204, after the voice call is started, a voice recognition module is started synchronously to acquire audio input by both sides on a call from a voice encoding module.

In step S206, the voice recognition module extracts real-time spectrum and intensity of voice on a call of both sides respectively, and transmits them to a judgment module.

In step S208, the judgment module periodically judges whether the spectrum of the audio is in a normal human voice spectrum range, and then auxiliarily judges whether the intensity is normal call intensity, and if both the spectrum and intensity of voice do not comply with the human voice call characteristic, judges that the mobile terminal is in a silence state, and a timer T2 is started.

In step S210, accumulated time exceeds a first time threshold.

Wherein, the judgment module continues to periodically detect whether the audio input complies with the human voice characteristic in a time period when the value of T2 has not exceeded the first time threshold, and when a call input is received before the accumulation expires, the value of T2 is reset.

In step S212, the mobile terminal prompts the user in accordance with a preset prompt mode (such as in a form of combination of voice, vibration, picture, video etc.).

In step S214, the mobile terminal detects whether an operation instruction of ending the voice call initiated by the user (including an operation on the touch screen or keyboard of the mobile phone) has been received within a second time threshold, and if yes, the process returns to step S202; otherwise, the process proceeds to step S216.

In step S216, the mobile phone forcibly ends the call.

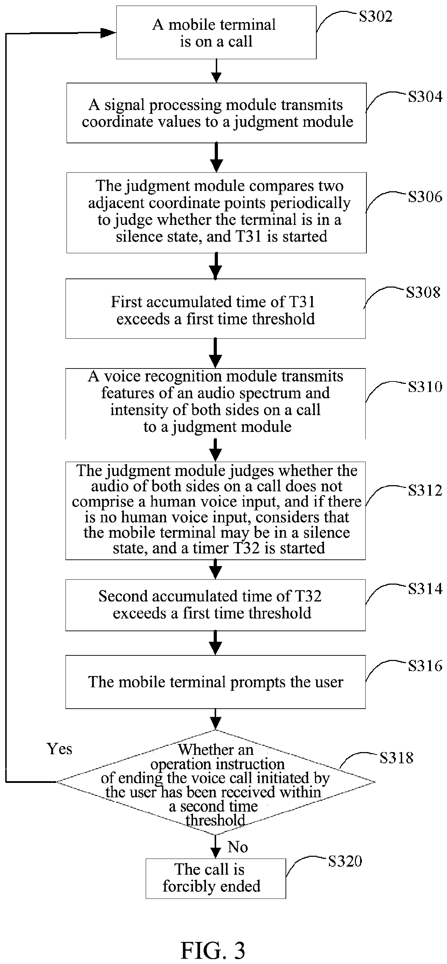

If the modes using an operation state and an audio input are combined at the same time for processing the abnormal call, as shown in Fig. 3, the process comprises the following steps.

In step S302, a mobile terminal is on a call, and a user (or terminal by default) starts an abnormal call prompt function.

In step S304, after the voice call is started, an acceleration sensor is started synchronously to transmit a piezoelectric signal to a signal processor for process, and the signal processor transforms the signal value into three-dimensional coordinate values XYZ of the mobile terminal and transmits the values to a judgment module.

In step S306, a distance between or sizes of first two coordinate points is calculated periodically by the judgment module, and if the distance is 0 or a difference between the sizes is very small, it is judged that the mobile terminal is in a silence state, and a timer T31 is started.

In step S308, accumulated time of T31 exceeds a first time threshold.

In this step, when differences between several continuous coordinate points and a previous coordinate point are suddenly very large in a time period when the value of T31 has not exceeded the first time threshold, the value of T31 is reset and the process returns to step 306.

In step S310, a voice recognition module is started automatically to acquire audio input by both sides on a call from a voice encoding module; and the voice recognition module compares the voice input of both sides, and transmits features such as an audio spectrum and intensity etc. of both sides to a judgment module.

In step S312, the judgment module periodically judges whether the audio of both sides does not comprise a human voice input according to the range of features such as spectrum and intensity etc. of the human voice, and if it is confirmed that there is no call input on both sides, judges that the mobile terminal may be in a silence state, and a timer T32 is started.

In step S314, accumulated time of T32 exceeds a first time threshold.

In this step, the judgment module continues to periodically detect whether the audio input complies with the human voice characteristic in a time period when the value of T21 has not exceeded the first time threshold, and when a call input is received before the accumulation expires, the value of T2 is reset, and the process returns to step 306.

In step S316, the mobile terminal prompts the user in accordance with a preset prompt mode (such as in a form of combination of voice, vibration, picture, video etc.).

In step S318, the mobile terminal detects whether an operation instruction of ending the voice call initiated by the user (including an operation on the touch screen or keyboard of the mobile phone) has been received within a second time threshold, and if yes, the process returns to step S302; otherwise, the process proceeds to step S320.

In step S320, the mobile phone forcibly ends the call.

### Example two

The present example describes a mobile terminal, which at least comprises:
a detection unit, in the process of a voice call, detects whether the mobile terminal is in an idle call state, and when it is detected that the mobile terminal is in the idle call state, notifies a voice call module that the mobile terminal is in the idle call state;
the voice call module, after receiving the notification that the mobile terminal is in the idle call state, in accordance with a preset mode, prompts a user that the voice call has ended, or directly hangs up the voice call, or hangs up the voice call after prompting the user that the voice call has ended. It should be illustrated that the voice call module in the present embodiment adds an abnormal call prompt function.

The specific process of the voice call module hanging up the voice call after prompting the user that the voice call has ended comprises after prompting the user that the voice call has ended in accordance with a preset mode, further judging whether an operation instruction of ending the voice call initiated by the user has been received within set duration or when a number of prompts has achieved a set value, and automatically hanging up the voice call if both of them are not received.

Said detection unit may comprise a voice recognition module and a judgment module.

The voice recognition module detects input and output audio signals in real time in the process of a voice call.

The judgment module determines that the mobile terminal is in the idle call state when the input and output audio signals have not been detected by the voice recognition module within set duration.

Specifically, a voice recognition module is preset in the mobile phone. In the process of a call, the voice recognition module performs judgment through the input audio (i.e., output audio signal) of the local phone and the voice input (i.e., input audio signal) of the counterpart phone transmitted through a network, to detect whether there is a voice input at both the counterpart phone and the local phone, or detect whether the frequency of the detected audio signal corresponds to the human voice frequency range. Whether the intensity of the detected audio signal is in a normal human voice range is determined, and if the voice input module judges there is no voice input at both sides (i.e., both the input audio signal and the output audio signal can not be detected) for a long time (for example, said first time threshold), it may be considered that both sides have ends the call but have not hung up in time.

In some other schemes, when detecting an input or output audio signal, said voice recognition module further detects the frequency and/or intensity of the detected input or output audio signal. At this time, when the voice recognition module detects that the frequency and/or intensity of all detected audio signals exceed the human voice range within set duration, the judgment module determines that the mobile terminal is in the idle call state.

In addition, in a preferable scheme, in consideration that when a user make a call with a mobile phone in hand, the user may move or change a gesture in a certain time, the mobile terminal may be added with a gravity sensor to judge whether the user is on a call. Specifically, the gravity sensor detects X, Y and Z values of the mobile terminal in real time in the process of a voice call; and the detection unit detects whether the mobile terminal is in the idle call state only if the X, Y and Z values detected by the gravity sensor are not changed within set duration.

Of course, the above detection unit may also only include a gravity sensor and a judgment module. Wherein, the gravity sensor detects X, Y and Z values of the mobile terminal in real time in the process of a voice call; and the judgment module can determine that the mobile terminal is in the idle call state when the X, Y and Z values detected by the gravity sensor are not changed within set duration.

In the above description, whether the mobile phone is in an idle abnormal call state is determined by detecting a motion state or audio input of a mobile terminal, and the user is prompted. In practice, in the method mentioned in the present invention, the present invention may also be implemented in other modes, such as detecting whether a human body approaches a sensor or infrared etc. There is no obvious difference between the principle thereof and the above two modes, and thus, the description thereof will be omitted here.

A person having ordinary skill in the art can understand that all or a part of steps in the above method can be implemented by programs instructing related hardware, and the programs can be stored in a computer readable storage medium, such as a read-only memory, disk or disc etc. Alternatively, all or a part of steps in the above embodiments can also be implemented by one or more integrated circuits. Accordingly, each module/unit in the above embodiments can be implemented in a form of hardware, or can also be implemented in a form of software functional module. The present application is not limited to any particular form of a combination of hardware and software.

The above description is only the preferred embodiments of the present invention and is not intended to limit the protection scope of the present invention.

### Industrial Applicability

The embodiments of the present invention can achieve expected effects only by making few variations on the mobile terminal, without changing software and hardware on a large scale.

## Claims

1. An abnormal call processing method of a mobile terminal, comprising:
in the process of a voice call between a mobile terminal and a counterpart phone through a network, the mobile terminal detecting in real time whether the mobile terminal is in an idle call state, and when it is detected that the mobile terminal is in the idle call state, prompting in accordance with a preset mode a user that the mobile terminal is in the idle call state, or automatically hanging up the voice call, or hanging up the voice call after prompting the user that the mobile terminal is in the idle call state;
**characterized by** that, the process of detecting in real time whether the mobile terminal is in an idle call state comprises:
in the process of a voice call (S302), detecting, by a gravity sensor in the mobile terminal, three-dimensional coordinate values of the mobile terminal in a real time (S304), and judging whether the detected three-dimensional coordinate values of the mobile terminal are not changed within set duration;
when judging that the detected three-dimensional coordinate values are not changed within set duration (S308), the mobile terminal detecting in real time input and output audio signals transmitted through the network; if the input or output signal is detected, judging whether a frequency or intensity of the detected audio signals is within a human voice range (S310, S312); and if the frequencies or intensities of all the detected audio signals exceed the human voice range within set duration (S314), determining that the mobile terminal is in the idle call state (S316).

2. The method according to claim 1, wherein, the process of the mobile terminal hanging up the voice call after prompting in accordance with a preset mode the user that the mobile terminal is in the idle call state comprises:
the mobile terminal prompting the user that the mobile terminal is in the idle call state in accordance with a preset mode, and if an operation instruction of ending the voice call initiated by the user has not been received within set duration or when a number of prompts has achieved a set value, automatically hanging up the voice call.

3. The method according to claim 2, wherein, the process of detecting whether the mobile terminal is in an idle call state comprises:
if the input and output audio signals have not been detected within set duration, determining that the mobile terminal is in the idle call state.

4. A mobile terminal, comprising:
a detection unit, configured to: in the process of a voice call between the mobile terminal and a counterpart phone through a network, detect whether the mobile terminal is in an idle call state, and when it is detected that the mobile terminal is in the idle call state, notify a voice call module that the mobile terminal is in the idle call state;
the voice call module, configured to: upon receiving the notification that the mobile terminal is in the idle call state, prompt in accordance with a preset mode a user that the mobile terminal is in the idle call state, or automatically hang up the voice call, or hang up the voice call after prompting the user that the mobile terminal is in the idle call state ;
a gravity sensor, configured to detect three-dimensional coordinate values of the mobile terminal in real time in the process of a voice call;
**characterized by** that,
the detection unit is further configured to judge whether the three-dimensional coordinate values of the mobile terminal detected by the gravity sensor are not changed with set duration;
the detection unit comprises:
a voice recognition module, configured to: when judging that the detected three-dimensional coordinate values are not changed within set duration, detect in real time input and output audio signals transmitted through the network, and when the audio signal is detected, detect a frequency or intensity of the input and output audio signal;
a judgment module, configured to determine that the mobile terminal is in the idle call state when the frequencies or intensities of all the detected audio signals exceed the human voice range within set duration.

5. The mobile terminal according to claim 4, wherein,
the voice call module is configured to: when hanging up the voice call after prompting the user that the mobile terminal is in the idle call state, firstly prompt the user that the mobile terminal is in the idle call state in accordance with the preset mode, and if an operation instruction of ending the voice call initiated by the user has not been received within set duration or when a number of prompts has achieved a set value, automatically hang up the voice call.

6. The mobile terminal according to claim 5, wherein,
the judgment module is configured to determine that the mobile terminal is in the idle call state when the input and output audio signals have not been detected by the voice recognition module within set duration.

## Patentansprüche

1. Ein Verarbeitungsverfahren für anormale Anrufe eines mobilen Endgeräts, Folgendes umfassend:
im Verlauf eines Sprachanrufs zwischen einem mobilen Endgerät und einem Partnertelefon über ein Netzwerk, das Erfassen durch das mobile Endgerät, in Echtzeit, ob das mobile Endgerät sich in einem Ruhe-Anrufszustand befindet, und wenn festgestellt wird, dass das mobile Endgerät sich im Ruhe-Anrufszustand befindet, Benachrichtigen eines Benutzers gemäß einem voreingestellten Modus, dass das mobile Endgerät sich im Ruhe-Anrufszustand befindet, oder
automatisches Beenden des Sprachanrufs oder Beenden des Sprachanrufs nach Benachrichtigen des Benutzers, dass das mobile Endgerät sich im Ruhe-Anrufszustand befindet;
**dadurch gekennzeichnet, dass** das Verfahren des Erfassens in Echtzeit, ob sich das mobile Endgerät in einem Ruhe-Anrufszustand befindet, Folgendes umfasst:
während des Vorgangs eines Sprachanrufs (S302), Erfassen, durch einen Beschleunigungssensor im mobilen Endgerät, von dreidimensionalen Koordinatenwerten des mobilen Endgeräts in einer Echtzeit (S304), und Beurteilen, ob die erfassten dreidimensionalen Koordinatenwerte des mobilen Endgeräts innerhalb einer festgesetzten Dauer nicht verändert werden;
bei Beurteilen, dass die erfassten dreidimensionalen Koordinatenwerte innerhalb der festgesetzten Dauer nicht verändert werden (S308), das Erfassen, durch das mobile Endgerät, in Echtzeit, von Eingangs- und Ausgangs-Tonsignalen, die über das Netzwerk übertragen werden; wenn das Eingangs- oder Ausgangssignal erfasst wird, Beurteilen, ob eine Frequenz oder Intensität der erfassten Tonsignale innerhalb einer Bandbreite der menschlichen Stimme liegt (S310, S312); und wenn die Frequenzen oder Intensitäten aller erfassten Tonsignale innerhalb einer festgesetzten Dauer außerhalb der Bandbreite der menschlichen Stimme liegen (S314), Bestimmen, dass das mobile Endgerät sich im Ruhe-Anrufszustand befindet (S316).

2. Das Verfahren gemäß Anspruch 1, wobei der Vorgang des Beendens des Sprachanrufs durch das mobile Endgerät nach dem Benachrichtigen des Nutzers gemäß einem voreingestellten Modus, dass das mobile Endgerät sich im Ruhe-Anrufszustand befindet, Folgendes umfasst:
das Benachrichtigen des Nutzers, dass das mobile Endgerät sich im Ruhe-Anrufszustand befindet, gemäß einem voreingestellten Modus und, wenn eine Arbeitsanweisung zum Beenden des Sprachanrufs, die vom Benutzer initiiert wurde, nicht innerhalb des eingestellten Zeitraums empfangen wurde oder wenn eine Reihe von Bereitmeldungen einen festgesetzten Wert erreicht hat, automatisches Beenden des Sprachanrufs.

3. Das Verfahren gemäß Anspruch 2, wobei der Vorgang des Erkennens, ob das mobile Endgerät sich in einem Ruhe-Anrufszustand befindet, Folgendes umfasst:
wenn die Eingangs- und Ausgangs-Tonsignale nicht innerhalb des eingestellten Zeitraums erfasst wurden, Bestimmen, dass das mobile Endgerät sich im Ruhe-Anrufszustand befindet.

4. Ein mobiles Endgerät, das Folgendes umfasst:
eine Erkennungseinheit, konfiguriert, um: während des Vorgangs eines Sprachanrufs zwischen dem mobilen Endgerät und einem Partnertelefon über ein Netzwerk festzustellen, ob das mobile Endgerät sich in einem Ruhe-Anrufszustand befindet, und wenn erkannt wird, dass das mobile Endgerät sich im Ruhe-Anrufszustand befindet, ein Sprachanrufmodul zu benachrichtigen, dass das mobile Endgerät sich im Ruhe-Anrufszustand befindet;
das Sprachanrufmodul, konfiguriert, um: nach dem Empfangen der Benachrichtigung, dass das mobile Endgerät sich im Ruhe-Anrufszustand befindet, einen Nutzer gemäß einem voreingestellten Modus zu benachrichtigen, dass das mobile Endgerät sich im Ruhe-Anrufszustand befindet,
oder den Sprachanruf automatisch zu beenden oder den Sprachanruf zu beenden nach Benachrichtigung des Nutzers, dass das mobile Endgerät sich im Ruhe-Anrufszustand befindet;
einen Beschleunigungssensor, konfiguriert, um im Verlauf eines Sprachanrufs dreidimensionale Koordinatenwerte des mobilen Endgeräts in Echtzeit zu erfassen;
**dadurch gekennzeichnet, dass**
die Erkennungseinheit weiter konfiguriert ist, um zu beurteilen, ob die dreidimensionalen Koordinatenwerte des mobilen Endgeräts, die durch den Beschleunigungssensor erfasst werden, mit der eingestellten Dauer nicht verändert werden;
die Erkennungseinheit Folgendes umfasst:
ein Spracherkennungsmodul, konfiguriert, um: bei Beurteilung, dass die erfassten dreidimensionalen Koordinatenwerte innerhalb der eingestellten Dauer nicht verändert werden, in Echtzeit Eingangs- und Ausgangs-Tonsignale zu erfassen, die über das Netzwerk übertragen werden,
und wenn das Tonsignal erfasst wird, eine Frequenz oder Intensität des Eingangs- und Ausgangs-Tonsignals zu erfassen,
ein Beurteilungsmodul, konfiguriert, um festzustellen, dass das mobile Endgerät sich im Ruhe-Anrufszustand befindet, wenn die Frequenzen oder Intensitäten aller erfassten Tonsignale innerhalb eines festgesetzten Zeitraums außerhalb der Bandbreite der menschlichen Stimme liegen.

5. Das mobile Endgerät gemäß Anspruch 4, wobei
das Sprachanrufmodul konfiguriert ist, um: beim Beenden des Sprachanrufs nach Benachrichtigung des Nutzers, dass das mobile Endgerät sich im Ruhe-Anrufszustand befindet, zunächst den Nutzer zu benachrichtigen, dass das mobile Endgerät sich im Ruhe-Anrufszustand befindet, gemäß dem voreingestellten Modus, und wenn innerhalb eines festgesetzten Zeitraums eine Arbeitsanweisung zum Beenden des Sprachanrufs, die vom Nutzer initiiert wurde, nicht empfangen wurde, oder wenn eine Reihe von Bereitmeldungen einen festgesetzten Wert erreicht hat, den Sprachanruf automatisch zu beenden.

6. Das mobile Endgerät gemäß Anspruch 5, wobei
das Beurteilungsmodul konfiguriert ist, um festzustellen, dass das mobile Endgerät sich im Ruhe-Anrufszustand befindet, wenn die Eingangs- und Ausgangs-Tonsignale nicht innerhalb des festgesetzten Zeitraums von dem Spracherkennungsmodul erfasst wurden.

## Revendications

1. Procédé de traitement d'appel anormal d'un terminal mobile, comprenant :
lors d'un processus d'une communication vocale entre un terminal mobile et un téléphone correspondant, via un réseau, la détection en temps réel, par le terminal mobile, pour savoir si le terminal mobile est dans un état d'appel de repos et, s'il est détecté que le terminal mobile est à l'état d'appel de repos, la signalisation, conformément à un mode préréglé, à un utilisateur, lui indiquant que le terminal mobile est à l'état d'appel de repos, ou l'arrêt automatique de la communication vocale, ou l'arrêt de la communication vocale après avoir signalé à l'utilisateur que le terminal mobile est à l'état d'appel de repos,
**caractérisé en ce que** le processus de détection en temps réel pour savoir si le terminal mobile est à l'état d'appel de repos comprend :
lors du processus d'une communication vocale (S302), la détection, par un détecteur de gravité dans le terminal mobile, de valeurs de coordonnées tridimensionnelles du terminal mobile en temps réel (S304), et l'évaluation pour savoir si les valeurs coordonnées tridimensionnelles détectées du terminal mobile n'ont pas changé au cours de la durée réglée ;
lorsque l'on estime que les valeurs de coordonnées tridimensionnelles détectées n'ont pas changé pendant la durée réglée (S308), la détection en temps réel, par le terminal mobile, de signaux audio d'entrée et de sortie transmis via le réseau ; si le signal d'entrée ou de sortie est détecté, l'évaluation pour savoir si une fréquence ou une intensité des signaux audio détectés se situe dans une gamme de la voix humaine (S310, S312) ; et si les fréquences ou intensités de tous les signaux audio détectés dépassent la gamme de la voix humaine pendant la durée réglée (S314), la détermination que le terminal mobile est à l'état d'appel de repos (S316).

2. Procédé selon la revendication 1, selon lequel le processus d'arrêt de la communication vocale par le terminal mobile, après avoir signalé à l'utilisateur, conformément à un mode préréglé, que le terminal mobile est à l'état d'appel de repos, comprend :
la signalisation, par le terminal mobile, à l'utilisateur, que le terminal mobile est à l'état d'appel de repos, conformément à un mode préréglé, et si une instruction de fonctionnement d'arrêt de la communication vocale, déclenchée par l'utilisateur, n'a pas été reçue pendant la durée réglée, ou si un nombre de signalisations a atteint une valeur réglée, l'arrêt automatique de la communication vocale.

3. Procédé selon la revendication 2, selon lequel le processus consistant à détecter si le terminal mobile est à l'état d'appel de repos comprend :
si les signaux audio d'entrée et de sortie n'ont pas été détectés pendant la durée réglée, la détermination indiquant que le terminal mobile est à l'état d'appel de repos.

4. Terminal mobile, comprenant :
une unité de détection, configurée pour : lors du processus d'une communication vocale entre le terminal mobile et un téléphone correspondant, via un réseau, détecter si le terminal mobile est à l'état d'appel de repos, et s'il est détecté que le terminal mobile est à l'état d'appel de repos, notifier à un module de communication vocale que le terminal mobile est à l'état d'appel de repos ;
le module de communication vocale, configuré pour : après réception de la notification indiquant que le terminal mobile est à l'état d'appel de repos, signaler, conformément à un mode préréglé, à un utilisateur que le terminal mobile est à l'état d'appel de repos, ou arrêter automatiquement la communication vocale, ou arrêter la communication vocale après avoir signalé à l'utilisateur que le terminal mobile est à l'état d'appel de repos ;
un détecteur de gravité, configuré pour détecter en temps réel des valeurs de coordonnées tridimensionnelles du terminal mobile, au cours du processus de communication vocale ;
**caractérisé en ce que**
l'unité de détection est en outre configurée pour évaluer si les valeurs de coordonnées tridimensionnelles du terminal mobile détectées par le détecteur de gravité n'ont pas changé pendant la durée réglée,
l'unité de détection comprend :
un module de reconnaissance vocale, configuré pour : lorsqu'il est estimé que les valeurs de coordonnées tridimensionnelles détectées n'ont pas changé pendant la durée réglée, détecter en temps réel des signaux audio d'entrée et de sortie transmis via le réseau, et, lorsque le signal audio est détecté, détecter une fréquence ou une intensité du signal audio d'entrée et de sortie ;
un module d'évaluation, configuré pour déterminer que le terminal mobile est à l'état d'appel de repos lorsque les fréquences ou intensités de tous les signaux audio détectés dépassent la gamme de la voix humaine pendant la durée réglée.

5. Terminal mobile selon la revendication 4, dans lequel
le module de communication vocale est configuré pour : lors de l'arrêt de la communication vocale, après la signalisation à l'utilisateur indiquant que le terminal mobile est à l'état d'appel de repos, signaler d'abord à l'utilisateur que le terminal mobile est à l'état d'appel de repos, conformément au mode préréglé, et si une instruction de fonctionnement d'arrêt de la communication vocale, déclenchée par l'utilisateur, n'a pas été reçue pendant la durée réglée, ou lorsqu'un nombre de signalisations a atteint une valeur réglée, arrêter automatiquement la communication vocale.

6. Terminal mobile selon la revendication 5, dans lequel
le module d'évaluation est configuré pour déterminer que le terminal mobile est à l'état d'appel de repos lorsque les signaux audio d'entrée et de sortie n'ont pas été détectés par le module de reconnaissance vocale pendant la durée réglée.
